# EUROPEAN PATENT APPLICATION

(11) **EP 4 546 538 A1**
(43) Date of publication of application: **30.04.2025**
(21) Application number: 23850359.3
(22) Date of filing: 28.07.2023
(51) Int. Cl.: H01M 50/342, H01M 50/531, H01M 50/211

(54) **SECONDARY BATTERY MODULE**

(30) Priority: 02.08.2022 KR 20220096405; 02.05.2023 KR 20230056993
(71) Applicant: LG Energy Solution, Ltd., Seoul 07335 (KR)
(72) Inventor: LEE, Hee Su, Daejeon 34122 (KR); PARK, Won Kyoung, Daejeon 34122 (KR); AN, Hyuk, Daejeon 34122 (KR); SHIN, Eun Gyu, Daejeon 34122 (KR); OH, Jae Hun, Daejeon 34122 (KR)
(74) Representative: Plasseraud IP
(86) International application number: PCT/KR2023/011043
(87) International publication number: WO 2024/029857

(57) **Abstract**

The present invention relates to a secondary battery module, and more particularly, to a secondary battery module including a plurality of secondary batteries.

A secondary battery module according to the present invention includes: a plurality of secondary batteries in which an electrode assembly is accommodated in a battery case of which an edge is sealed; and a housing having an accommodation space in which the plurality of secondary batteries are accommodated, wherein the battery case includes: at least one folding part, which is folded so that an end thereof is surrounded inward, on the edge; and at least one exhaust part, in which sealing is released to discharge an internal gas of the battery case when the end is exposed to the outside, and an internal pressure of the battery case is higher than a predetermined pressure, on the edge, wherein at least one venting part through which the gas discharged from the exhaust part is exhausted to the outside is provided in the housing.

## Description

### TECHNICAL FIELD

### CROSS-REFERENCE TO RELATED APPLICATION

The present application claims the benefit of the priority of Korean Patent Application Nos. 10-2022-0096405, filed on August 2, 2022, and 10-2023-0056993, filed on May 2, 2023, which are hereby incorporated by reference in their entirety.

### TECHNICAL FIELD

The present invention relates to a secondary battery module, and more particularly, to a secondary battery module including a plurality of secondary batteries.

### BACKGROUND ART

In recent, secondary batteries have attracted considerable attention as power sources for electric vehicles (EVs), hybrid electric vehicles (HEVs), and the like, which have been developed to solve limitations, such as air pollution, caused by existing gasoline and diesel vehicles that use fossil fuels.

While one or two to three or four secondary batteries are used in a small mobile device, a battery module in which a plurality of secondary batteries are electrically connected to each other, or a secondary battery pack in which a plurality of secondary battery modules are electrically connected to each other is used due to needs for high power and large capacity in medium and large devices such as the electric vehicles.

Among the currently commercialized secondary batteries, one of the most spotlighted secondary batteries may be lithium secondary batteries, which are capable of being classified into can type, prismatic type, and pouch-type according to their shapes of exterior materials. Among them, the pouch-type secondary batteries are being widely used in medium and large-sized battery modules because of their high energy density and easy stacking.

As demands for secondary battery modules mounted on vehicles increase in recent years, customer's demands for stability are increasing. However, the customers are requiring to increase in energy density of the secondary battery within a limited space of the secondary battery module. In this case, there is a limitation in that risks of safety related to ignition and explosion of the secondary battery also increase together.

In particular, the pouch-type secondary battery has a structure in which an electrode assembly is accommodated in a pouch-type battery case, and an edge of the battery case is sealed. Here, when the secondary battery is ignited to increase in temperature of the secondary battery, and an electrolyte is vaporized inside the battery case to generate a gas, the gas may tend to be ejected from a weakly sealed portion of the battery case without a certain path.

Here, when the gas is ejected to a position adjacent to an electrode lead or a busbar, a fatal problem may occur in which a spark causes rapid ignition of the secondary battery. In addition, when the gas ejected from the secondary battery is collected into a module housing, a problem of increasing in internal pressure of a module may also occur.

As a result, it is necessary to develop a technology to solve the above problems.

### DISCLOSURE OF THE INVENTION

### TECHNICAL PROBLEM

The present invention has been invented to solve the above problems, and an object of the present invention is to provide a secondary battery module that is capable of minimizing a risk of ignition by inducing a gas ejected from a secondary battery to a designated position in the event of an emergency situation such as the ignition of the secondary battery.

### TECHNICAL SOLUTION

A secondary battery module according to the present invention includes: a plurality of secondary batteries in which an electrode assembly is accommodated in a battery case of which an edge is sealed; and a housing having an accommodation space in which the plurality of secondary batteries are accommodated, wherein the battery case includes: at least one folding part, which is folded so that an end thereof is surrounded inward, on the edge; and at least one exhaust part, in which sealing is released to discharge an internal gas of the battery case when the end is exposed to the outside, and an internal pressure of the battery case is higher than a predetermined pressure, on the edge, wherein at least one venting part through which the gas discharged from the exhaust part is exhausted to the outside is provided in the housing.

The venting part may have a hole structure that passes through the inside and outside of the housing.

The venting part may be provided in a side portion of the housing.

The housing may include: a support frame configured to support a stack of the secondary batteries; and a pair of end plates coupled to the support frame and disposed on front and rear surfaces of the plurality of secondary batteries, wherein the venting part may be provided in the endplate.

Each of the secondary batteries may include an electrode lead protruding from the battery case, the endplate may be disposed to face the electrode lead, and the venting part may be provided at a position facing the battery case.

The venting part may have a hole structure that is stepped inside the endplate.

The venting part may be gradually expanded outward from the inside of the endplate.

The secondary battery module may further include a cover part attached to the housing to correspond to a position of the venting part, wherein the cover part may be configured to seal the venting part when the internal pressure of the accommodation space is less than the predetermined pressure, and the cover part may be ruptured to open the venting part when the internal pressure of the accommodation space is equal to or greater than the predetermined pressure.

The cover part may be made of a porous material.

The exhaust part may be folded at least one time or more so that an end of the exhaust part is exposed to the outside.

The folding part may be folded at least two times or more, and the exhaust part may be folded in a direction opposite to the folding part.

The exhaust part may be folded less times than the folding part.

A gap between inner surfaces provided to face each other by the folding in the exhaust part may be greater than that between inner surfaces provided to face each other by the folding in the folding part.

The secondary battery module may further include an electrode lead protruding from at least one end of the battery case, wherein the exhaust part may be disposed on remaining ends except for the end from which the electrode lead protrudes.

The folding part may be disposed on remaining ends except for the end from which the electrode lead protrudes.

The exhaust part may be provided in plurality, which are spaced apart from each other in a longitudinal direction of the battery case, and the exhaust part may be disposed between the plurality of folding parts.

The secondary battery module may further include a membrane part folded so that both ends thereof are connected to the exhaust part to surround an end of the exhaust part.

Both ends of the membrane part may be unfolded in a state of being connected to an outer surface of the exhaust part when the pressure inside the battery case is equal to or greater than the predetermined pressure to release the sealing of the exhaust part.

The membrane part may be made of a porous material.

The secondary battery may further include an adhesive member attached to the outside of the folding part so that the folding part is maintained in folded shape.

In the secondary battery, sealing strength of the folding part may be greater than that of the exhaust part.

### ADVANTAGEOUS EFFECTS

The present invention may have the effect of preventing the increase in internal pressure of the module by providing a venting part in the housing to exhaust the gas generated from the secondary battery to the outside of the housing.

In addition, the present invention may have the effect of minimizing the penetration of the external foreign substances into the housing to easily securing the gas discharge passage by providing the venting part in the side portion of the housing.

In addition, the present invention may further include the cover part provided to correspond to the position of the venting part so as to seal the venting part when the internal pressure of the accommodation space is less than the predetermined pressure, thereby realizing the effect of easily discharging the gas when the internal pressure of the module increases while minimizing the penetration of the external foreign substances into the housing.

In addition, the present invention may have the effect of minimizing the risk of the ignition by inducting the gas generated inside the battery case so that the gas is discharged to the designated position by providing the exhaust part, of which the distal end is exposed to the outside, at the edge of the battery case.

In addition, the present invention may have the effect of preventing the external moisture and foreign substances from being introduced into the battery case while discharging the gas within the battery case by further including the membrane part connected to the exhaust part.

Therefore, the stability of the secondary battery module in the thermal runaway situation may be improved.

### BRIEF DESCRIPTION OF THE DRAWINGS

FIG. 1 is an exploded perspective view illustrating a secondary battery module according to Embodiment 1 of the present invention.
FIG. 2 is a detailed perspective view illustrating an endplate of FIG. 1.
FIG. 3 is a side view illustrating the endplate of FIG. 1.
FIG. 4 is a partial cross-sectional view taken along line A-A in FIG. 3.
FIG. 5 is a partial cross-sectional view illustrating a portion of a secondary battery module according to Embodiment 2 of the present invention.
FIG. 6 is a front view illustrating a secondary battery applied to the present invention.
FIG. 7 is a partial cross-sectional view taken along line B-B in FIG. 6.
FIG. 8 is a partial cross-sectional view taken along line C-C in FIG. 6 so as to illustrate a state before a gas is discharged through an exhaust part.
FIG. 9 is a cross-sectional view illustrating a state in which the gas is discharged through the exhaust part in FIG. 8.
FIG. 10 is a cross-sectional view illustrating a state before a gas is discharged through an exhaust part and a membrane part in a secondary battery module according to Embodiment 3 of the present invention.
FIG. 11 is a cross-sectional view illustrating a state in which the gas is discharged through the exhaust part and the membrane part in FIG. 10.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention may provide a secondary battery module 100 including: a plurality of secondary batteries 110 in which an electrode assembly 111 is accommodated in a battery case 112 of which an edge is sealed; and a housing 120 having an accommodation space in which the plurality of secondary batteries 110 are accommodated, wherein the battery case 112 may include: at least one folding part 112a, which is folded so that an end thereof is surrounded inward, on the edge; and at least one exhaust part 112b, in which sealing is released to discharge an internal gas of the battery case 112 when the end is exposed to the outside, and an internal pressure of the battery case 112 is higher than a predetermined pressure, on the edge, wherein at least one venting part 122a through which the gas discharged from the exhaust part 112b is exhausted to the outside is provided in the housing 120.

First, the secondary battery 110 may be configured so that the electrode assembly 111 is accommodated in the battery case 112 of which the edge is sealed, and may have various structures.

Here, the electrode assembly 111 may be configured so that electrodes and separators are stacked and may have various structures. For example, the electrode assembly 111 may have a structure in which positive electrode collector/positive electrode active material layer/separator/negative electrode active material layer/negative electrode collector are sequentially stacked so that the positive electrode active material layer disposed one surface of the separator faces the negative electrode active material layer disposed on the other surface of the separator. Here, note that the electrode assembly 111 is accommodated in the battery case 112 and is expressed as a dotted line in the drawings.

The electrode assembly 111 may be accommodated in the battery case 112 together with an electrolyte. Here, the battery case 112 may be configured so that the edge thereof is sealed and may have various structures.

The battery case 112 may be provided so that the edge of the battery case 112 is folded to reduce a volume of the secondary battery 110 or improve sealing force of the battery case 112, thereby improving energy density.

At least one exhaust part 112b and a folding part 112a may be provided at the edge of the battery case 112 to discharge a gas to a designated position when the gas is generated in the battery case 112 due to ignition of the secondary battery 110. Here, a detailed description of the exhaust part 112b and the folding part 112a will be described later.

The secondary battery 110 may further include an electrode lead 113 protruding from at least one end of the battery case 112. Here, the electrode lead 113 may be understood as a configuration of which one end is connected to the electrode assembly 111 inside the battery case 112, and the other end is electrically connected to an external electric device and/or the secondary battery 110.

A plurality of above-described secondary batteries 110 may be stacked and accommodated in the housing 120. Here, the housing 120 may be a configuration in which an accommodation space for accommodating the plurality of secondary batteries 110 is defined, and may have various structures.

Here, the housing 120 may be provided with at least one venting part 122a that is capable of discharging the gas ejected from the secondary batteries 110 accommodated in the accommodation space to the outside. Here, the venting part 122a may be a configuration that is capable of releasing the gas to the outside at the moment at which the gas is generated in the secondary batteries 110, and may have an effect of preventing an increase in internal pressure of the secondary battery module 100.

The venting part 122a may be a configuration that exhausts the gas discharged from the above-described exhaust part 112b to the outside and may have various structures. For example, the venting part 122a may be provided as a hole structure passing through the inside and outside of the housing 120.

In addition, the venting part 122a may be provided at various positions in the housing 120. Here, the user may selectively provide a position of the venting part 122a so that the gas is inducted to be emitted to a designated position to minimize the risk of ignition.

Here, when the venting part 122a is provided in an upper portion of the housing 120, as the foreign substances or water fall from the outside, there is a problem that the foreign substances or water are easily penetrated into the housing 120 through the venting part 122a. In addition, when the venting part 122a is provided in a lower portion of the housing 120, it may be difficult to secure a gas exhaust passage. Thus, it may be preferable that the venting part 122a is provided in a side portion of the housing 120.

In order to explain the formed position of the venting part 122a in more detail, a structure of the housing 120 will be described first.

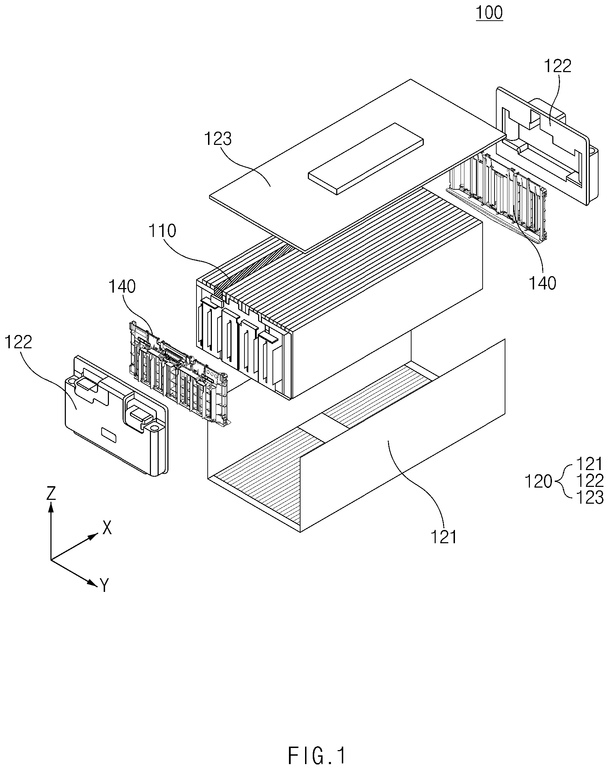

As illustrated in FIG. 1, the housing 120 may include: a support frame 121 that supports a stack of the secondary batteries 110; and a pair of endplates 122 coupled to the support frame 121 and disposed on front and rear surfaces of the stack of the secondary batteries 110.

Here, the support frame 121 may be a configuration that supports the secondary batteries 110 and may have various structures. For example, the support frame 121 may have a U-shaped structure as illustrated in FIG. 1 to support the lower and side portions of the secondary battery 110. However, the shape of the support frame 121 is not limited thereto and may be replaced with a frame having another shape such as a mono frame that covers remaining four surfaces of the secondary battery 110 except for an edge from which the electrode lead 113 protrudes.

In addition, as illustrated in FIG. 1, a cover frame 123 may be additionally provided on an opened upper portion of the support frame 121. The cover frame 123 may be coupled to the upper portion of the support frame 121 and may be provided above the secondary batteries 110 to define the accommodation space of the housing 120 together with the support frame 121.

The pair of endplates 122 may be configurations that are coupled to the support frame 121 and are disposed on front and rear surfaces of the plurality of secondary batteries 110 and may have various structures. Here, the front and rear surfaces of the plurality of secondary batteries 110 may be understood as surfaces provided in a direction in which the electrode lead 113 protrudes from the secondary battery 110.

Specifically, each of the endplates 122 may be coupled to the support frame 121 by welding or bolting. Here, a busbar assembly 140 may be additionally provided between the endplate 122 and the secondary battery 110. Thus, the endplate 122 may protect the busbar assembly 140 and various electrical components connected thereto from an external impact.

Here, the busbar assembly 140 may include a plurality of electrically conductive busbars and a busbar frame supporting the busbars, and the busbars may be provided to be in contact with the electrode lead 113 protruding from the secondary battery 110.

The endplate 122 may include a main body made of a metal material to protect the busbar assembly 140, other electrical components, and the secondary batteries 110 from the external impact and an insulating cover coupled to the main body and made of an insulating material to maintain insulation from the busbar assembly 140, other electrical components, and the secondary batteries 110.

At least one or more venting parts 122a may be formed in the endplate 122. Here, as illustrated in FIG. 1, the endplate 122 may have a structure extending in a longitudinal direction along an arrangement direction of the plurality of secondary batteries 110 (direction parallel to a Y-axis in FIG. 1) so that the endplate 122 is disposed to face one surface of each of all the secondary batteries 110 that are arranged side by side. Here, one surface of the secondary battery 110 may be understood as a surface on which the electrode lead 113 protrudes.

Thus, when forming the venting part 122a in the endplate 122, the gas may be quickly discharged to the outside regardless of where the secondary battery 110, in which the gas is generated, is disposed among the plurality of secondary batteries 110. As a result, the plurality of secondary batteries 110 may exhaust the gas sequentially rather than simultaneously to prevent explosion and control an ignition rate at a module level.

In addition, when forming the venting part 122a in the endplate 122, the venting part 122a may be provided in the side portion of the housing 120 to prevent the penetration of the foreign substances falling from above and easily form a gas discharge path.

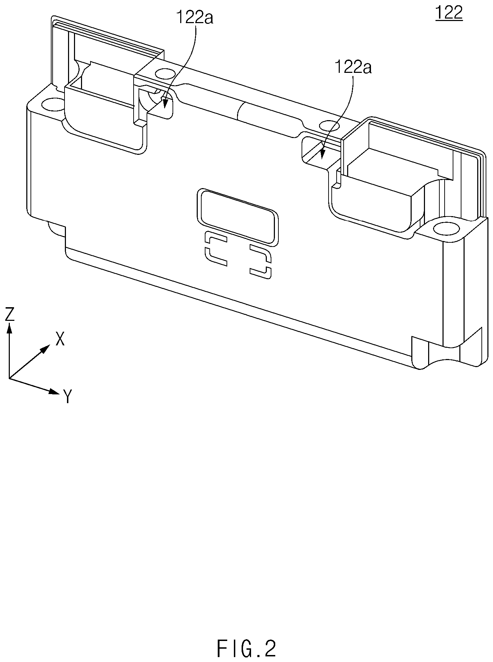

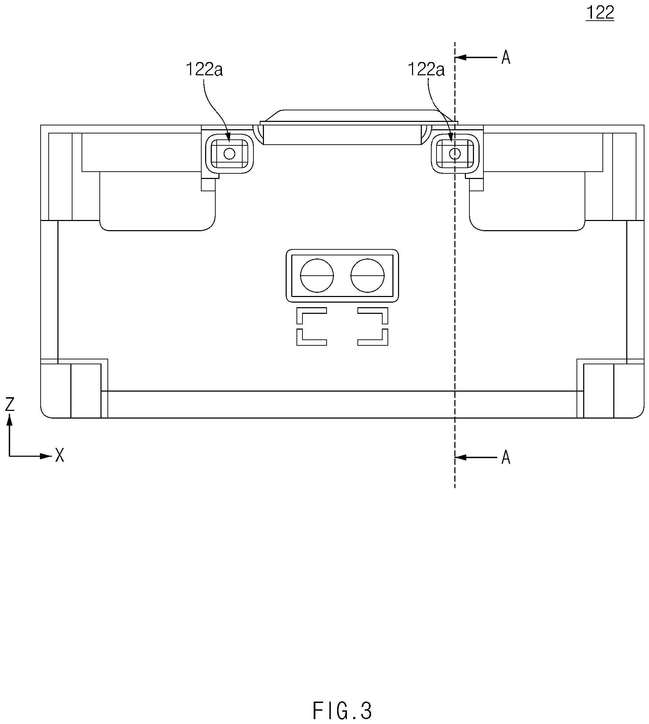

At least one or more venting parts 122a may be provided in the endplate 122. For example, two venting parts 122a may be provided in the endplate 122 as illustrated in FIGS. 2 and 3.

Here, the venting parts 122a may be provided at any position of the endplate 122. However, the venting part 122a may induce the gas to a portion, which is insulated due to the module structure, or at which there is less risk of occurrence of electric sparks, and thus, it may be preferable that a propagation speed after the ignition of the secondary battery 110 is effectively controlled in the module level.

In particular, the endplate 122 may be disposed to face the electrode lead 113 of the secondary battery 110, but even in this case, it may be preferable that the venting part 122a is disposed as being spaced apart from the electrode lead 113 as possible.

This is because the electrode lead 113 is electrically connected to the electrode assembly 111 inside the battery case 112 and the external electric device or secondary battery 110, and thus, there is a problem that the spark occurs to cause rapid ignition when the gas inside the housing 120 is discharged to the outside to pass close to the electrode lead 113. Thus, there is a great possibility that external short circuit occurs in the secondary battery module 100, and thermal runaway propagation between the plurality of secondary batteries 110 is accelerated.

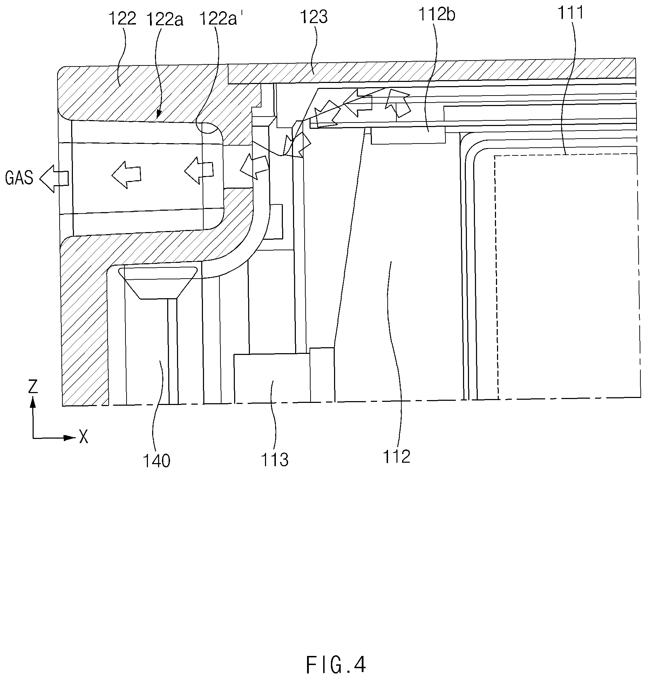

As a result, as illustrated in FIG. 4, the venting part 122a may be disposed at a position facing the battery case 112 rather than the electrode lead 113 on the endplate 122 disposed to face the electrode lead 113. Thus, when the gas is generated in the internal accommodation space of the secondary battery module 100, generation of flame due to the spark may be minimized by discharging the gas to the outside before moving toward the electrode lead 113. In this case, an occurrence of double line ground fault may be prevented, and the progress of the thermal runaway propagation between the plurality of secondary batteries 110 may be suppressed and delayed.

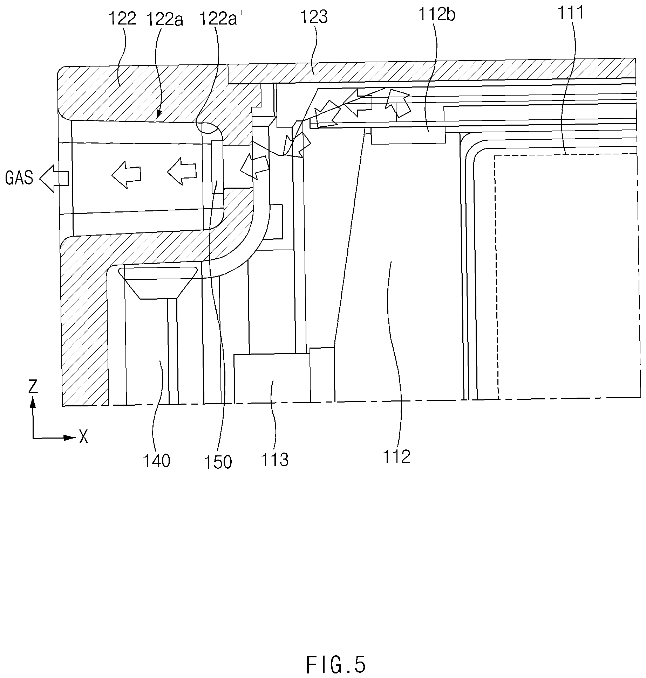

Here, in FIG. 4, the busbar assembly 140 is illustrated at one side of the venting part 122a. Here, the busbar assembly 140 may be a configuration that avoids the venting part 122a between the endplate 122 and the secondary battery 110, and thus, note that the busbar assembly 140 does not a configuration that closes the venting part 122a. This may also be applied to FIG. 5 below.

The venting part 122a described above may have various structures capable of discharging the gas inside the secondary battery module 100 to the outside. For example, the venting part 122a may be provided as a hole structure passing through the inside and outside of the endplate 122.

Here, the venting part 122a may be provided as a stepped hole structure inside the endplate 122. In more detail, as illustrated in FIG. 4, the venting part 122a may have the stepped hole structure that is expanded from the inside of the endplate 122 toward the outside.

In this case, in the stepped hole structure of the venting part 122a, an area having a relatively wide diameter and a structure opened toward the outside may be used as an area into which a jig used to transfer or fix the secondary battery module 100 is inserted. Here, an end of the jig may be fixed to be in contact with an inner wall 122a' provided due to the stepped portion in the venting part 122a so that the jig easily transfer and fix the secondary battery module 100 without interfering with the internal secondary battery 110.

The secondary battery module 100 according to the present invention may further include a cover part 150 attached to the housing 120 to correspond to the position of the venting part 122a. Here, an adhesive double-sided tape or the like may be interposed between the cover part 150 and the housing 120 to fix the cover part 150 to the housing 120.

Specifically, when an internal pressure of the accommodation space is less than a predetermined pressure, the cover part 150 may seal the venting part 122a, and when the internal pressure of the accommodation space is higher than the predetermined pressure, the cover part 150 may be ruptured to open the venting part 122a.

The cover part 150 may be provided at any position as long as the cover part 150 covers the venting part 122a. Here, when the venting part 122a has the stepped hole structure inside the endplate, the cover part 150 may be provided inside the endplate 122.

Specifically, as illustrated in FIG. 5, the cover part 150 may be fixed by attaching an edge thereof to the inner wall 122a' provided due to the stepped portion in the venting part 122a. In this case, the cover part 150 may be disposed inside the endplate 122 and be protected from the external shock to minimize an occurrence of problems such as damage or separation from the fixed position.

The cover part 150 may be made of a porous material. Thus, the cover part 150 may have effects of discharging the gas inside the housing 120 to the outside and preventing the moisture or foreign substances from being penetrated into the housing 120.

The above-described venting part 122a may be preferably provided at a position corresponding to the exhaust part 112b of the battery case 112 according to the present invention so that the gas discharged from the secondary battery 110 is quickly exhausted to the outside. Hereinafter, the detailed structures of the folding part 112a and the exhaust part 112b of the battery case 112 according to the present invention will be described.

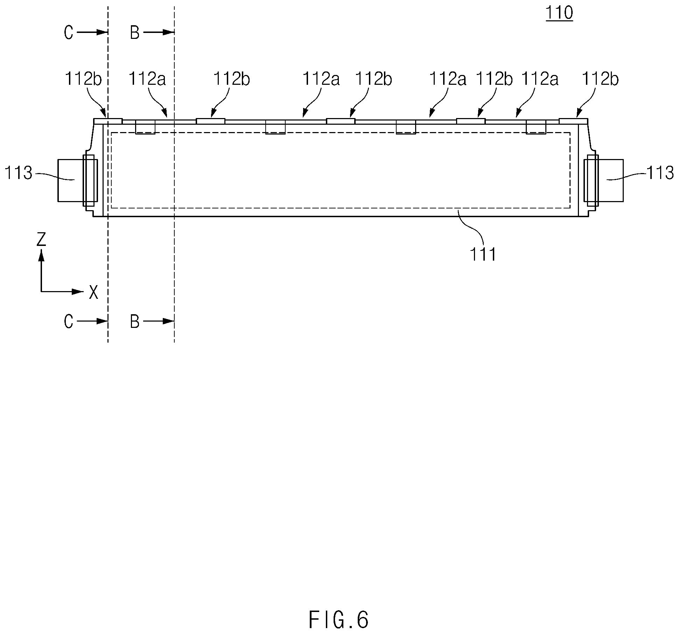

As illustrated in FIG. 6, the battery case 112 according to the present invention may include: at least one folding part 112a folded so that an end of an edge thereof is surrounded inward; and at least one exhaust part 112b through which the end of the edge is exposed to the outside.

Thus, when a predetermined amount of gas is generated inside the battery case 112, the gas may be preferentially discharged from the exhaust part 112b, which is relatively easier to discharge the gas than the folding part 112a. Thus, in the battery case 112 having the above-described structure, a user may discharge the gas to the designated position by selectively disposing the exhaust part 112b on the battery case 112 to minimize a risk due to the ignition of the secondary battery 110.

First, the folding part 112a may be a configuration that is folded so that the end of the edge of the battery case 112 is surrounded inward and may have various structures.

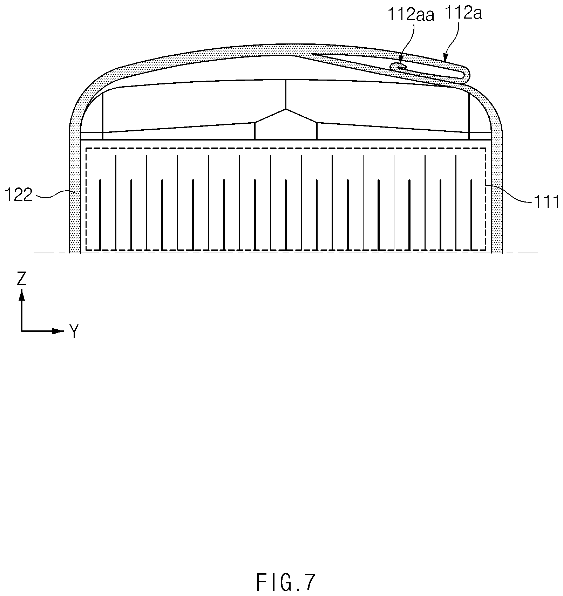

Specifically, as illustrated in FIG. 7, the folding part 112a may be provided at the edge of the battery case 112 and may have a structure in which an end 112aa of the folding part 112a is surrounded by inner surfaces facing each other through the folding.

Thus, the folding part 112a may have a structure in which the gas is relatively more difficult to be discharged than the exhaust part 112b through which the end is exposed to the outside because the end 112aa, through which the gas is discharged to the outside, is surrounded inward and thus may be understood as a configuration that induces the discharge of the gas to the exhaust part 112b.

In addition, the folding part 112a may have a structure in which external moisture or air is relatively more difficult to be penetrated because the end 112aa is surrounded inward and thus may be understood as a configuration that improves sealing force of the battery case 112.

The above-described folding part 112a may have any structure as long as the end 112aa is surrounded inward. For example, the folding part 112a may have a structure that is folded at least twice or more in one direction so that the end 112aa is surrounded inward at the edge of the battery case 112.

In addition, the folding part 112a may be provided with a structure in which the inner surfaces of the folding part 112a are in contact with each other or are adjacent to each other to prevent the movement of the gas as much as possible even if the gas flows into the folding part 112a.

An adhesive member may be attached to the outside of the folding part 112a. The adhesive member may fix the folding part 112a folded inward so that the folding part 112a is maintained in its folded shape. Here, the adhesive member may be an insulating tape or the like. When the adhesive member is attached to the outside of the folding part 112a, the folding part 112a may receive force to be maintained in inwardly folded shape, and the gas may be more difficult to be discharged than the exhaust part 112b of which the end is exposed to the outside. That is, the adhesive member may induce the gas to be discharged to the exhaust part 112b more efficiently.

The present invention may include an exhaust part 112b of which the sealing is released so that the gas inside the battery case 112 is discharged when an internal pressure of the battery case 112 is higher than a predetermined pressure.

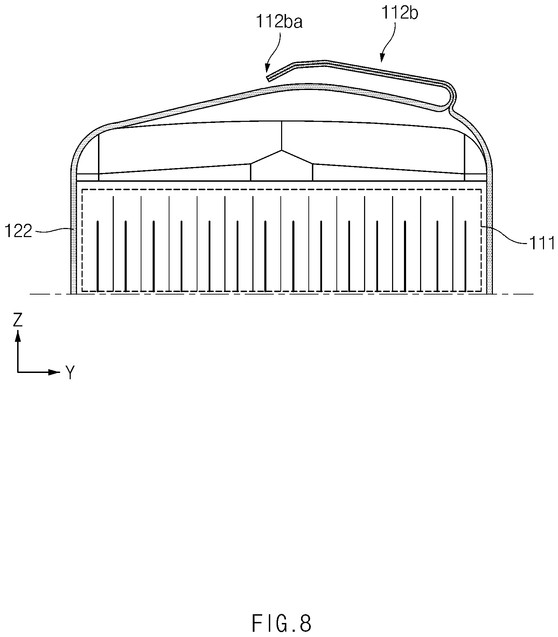

Specifically, as illustrated in FIG. 8, the exhaust part 112b may be provided at an edge of the battery case 112 and may have a structure in which an end 112ba of the exhaust part 112b is exposed to the outside.

Thus, the exhaust part 112b may have a structure in which the gas is relatively easily discharged when compared to the folding part 112a, of which the end is surrounded inward, because the end 112ba, through which the gas is discharged to the outside, is exposed to the outside, and thus, the exhaust part 112b may be understood as a configuration that operates preferentially rather than the above-described folding part 112a when the gas is generated in the battery case 112 so as to be used a gas discharge passage.

The exhaust part 112b may have any structure as long as the end 112ba is exposed to the outside. For example, the exhaust part 112b may have a structure that is folded at least once so that the end 112ba is exposed to the outside. Here, the exhaust part 112b may be folded in a direction opposite to the folding part 112a or may be folded less times than the folding part 112a.

In addition, it is preferable that the exhaust part 112b has a gap between inner surfaces of the exhaust part 112b, which are folded to face each other to maximize the movement of the gas when the gas flows into the exhaust part 112b is greater than a gap between the inner surfaces of the folding part 112a, which face each other.

As illustrated in FIG. 8, this exhaust part 112b may be maintained in the sealed state when no gas is generated inside the battery case 112, or when the gas pressure inside the battery case 112 is less than the predetermined pressure.

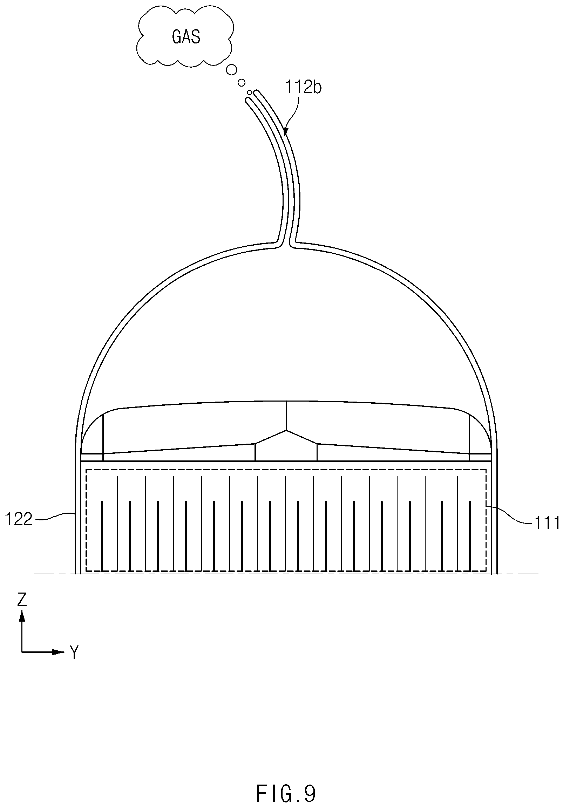

In addition, as illustrated in FIG. 9, even when the gas is generated inside the battery case 112, and the internal pressure of the battery case 112 reaches a predetermined pressure or higher, the sealing of the exhaust part 112b may be released to induce the discharge of the gas, and thus, the internal pressure of the battery case 112 may be reduced.

Regarding the manufacturing process, in the present invention, the directions in which the folding part 112a and the exhaust part 112b are folded are different from each other. Thus, it may be necessary to separate the folding part 112a from the exhaust part 112b so that the folding part 112a and the exhaust part 112b are folded in different directions. Specifically, after the position corresponding to the folding part 112a and the position corresponding to the exhaust part 112b are sealed, a portion between the folding part 112a and the exhaust part 112b may be cut so that the position corresponding to the folding part 112a and the position corresponding to the exhaust part 112b are folded independently of each other. Here, the cutting method may vary, and a sealed state of the cut portion may be maintained. The portion between the folding part 112a and the exhaust part 112b may be cut so that the folding part 112a and the exhaust part 112b are independently folded in the different directions.

The exhaust part 112b may be disposed in various manner in the battery case 112.

However, as described above, the secondary battery 110 according to the present invention may further include an electrode lead 113 protruding from at least one end of the battery case 112. In this case, it is preferable that the exhaust part 112b is disposed at a position that is far away from the electrode lead 113.

Since the electrode lead 113 is electrically connected to the electrode assembly 111 inside the battery case 112 and the external electric device or secondary battery 110, this is because a spark occurs to cause rapid ignition when the gas discharged from the exhaust part 112b is discharged at a position adjacent to the electrode lead 113.

Thus, as illustrated in FIGS. 6 to 7, when the electrode lead 113 protrudes from at least one end of the battery case 112, it is preferable that the exhaust part 112b is disposed on remaining ends except for the end from which the electrode lead 113 protrudes. Here, the above-described folding part 112a may also be disposed at the remaining ends except for the end from which the electrode lead 113 protrudes.

The exhaust part 112b described above may be provided in various numbers and positions on the battery case 112 in consideration of the amount of gas generated inside the battery case 112.

As an example, the exhaust part 112b may be provided as one piece and provided at a center of the edge of the battery case 112. As another example, the exhaust part 112b may be formed in plurality, which are spaced apart from each other along the longitudinal direction of the battery case 112. In this case, the exhaust part 112b may be provided between the plurality of folding parts 112a.

The folding part 112a and the exhaust part 112b may have different manufacturing processes so that the gas is discharged to the exhaust part 112b when the internal pressure of the battery case 112 is higher than the predetermined pressure. Specifically, sealing strength at the position at which the exhaust part 112b is disposed may be less than that at the position at which the folding part 112a is disposed. More specifically, the folding part 112a may be sealed to be thicker than the exhaust part 112b. Therefore, when the internal pressure of the battery case 112 is higher than the predetermined pressure, the gas may be discharged to the outside of the battery case 112 through the exhaust part 112b, which has relatively less sealability.

The secondary battery 110 according to the present invention may further include a membrane part 160 that is folded to surround the end of the exhaust part 112b.

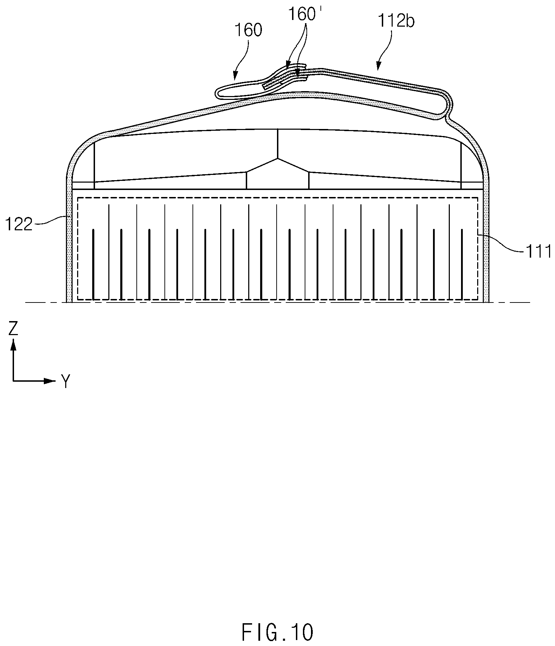

Specifically, as illustrated in FIGS. 10 to 11, the membrane part 160 may be configured so that both ends thereof are connected to the exhaust part 112b and folded to surround the end of the exhaust part 112b, and may have various structures.

In more detail, as illustrated in FIG. 10, when the exhaust part 112b is in the sealed state when the internal pressure of the battery case 112 is less than the predetermined pressure, the membrane part 160 may have a folded structure to surround the distal end of the exhaust part 112b.

Here, when the exhaust part 112b is in the sealed state so that both the ends of the membrane part 160 are maintained to be connected to the exhaust part 112b even when the sealing of the exhaust part 112b is released, the membrane part 160 may be disposed so that the folded portion of the membrane part 160 is spaced a predetermined distance from the end of the exhaust part 112b.

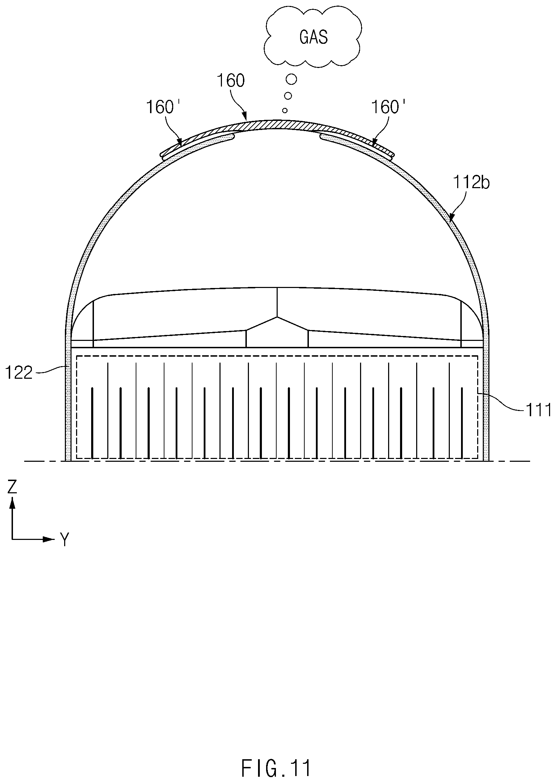

As illustrated in FIG. 11, when the internal pressure of the battery case 112 is higher than the predetermined pressure, and the sealing of the exhaust part 112b is released, both the ends of the membrane part 160 may be unfolded in a state of being connected to the outer surface of the exhaust part 112b.

The membrane part 160 may be made of a porous material. Thus, when the sealing of the exhaust part 112b is released, the gas inside the battery case 112 may be discharged to the outside, and simultaneously, the external moisture or foreign substances may be prevented from being introduced into the battery case 112. More specifically, the membrane part 160 may be made of a thin film in which a large number of small holes are defined by heating and stretching a Teflon-based resin. Therefore, particles such as moisture penetrated from the outside may not pass through the membrane part 160, but the gas generated inside may sufficiently pass through the membrane part 160 so as to be discharged to the outside. In addition, the membrane part 160 may be connected to the exhaust part 112b in various manners. For example, as illustrated in FIGS. 10 and 11, the membrane part 160 may be connected to the exhaust part 112b by interposing an adhesive material 160' between an inner surface of the membrane part 160 and an outer surface of the exhaust part 112b. The adhesive material 160' may bond the membrane part 160 to the exhaust part 112b through thermal fusion or the like.

The present invention may induce the gas generated inside the battery case 112 to be discharged to the outside of the housing 120 along a desired path. Therefore, it is possible to more efficiently deal with the risk of the occurrence inside the secondary battery module 100 due to the large amount of gas. In addition, relatively efficient response may also be possible in the event of the thermal runaway in which a large amount of gas is generated inside the secondary battery module 100 due to fire. That is, the stability of the secondary battery module 100 may be improved with respect to the problems occurring due to the internal gas.

While Embodiments of the present invention have been described with reference to the specific embodiments, it will be apparent to those skilled in the art that various changes and modifications may be made without departing from the spirit and scope of the invention as defined in the following claims.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

100: Secondary battery module
110: Secondary battery
111: Electrode assembly
112: Battery case
112a: Folding part
112aa: End of folding part
112b: Exhaust part
112ba: End of exhaust part
113: Electrode lead
120: Housing
121: Support frame
122: Endplate
122a: Venting part
122a': Inner wall of venting part
123: Cover frame
140: Busbar assembly
150: Cover part
160: Membrane part
160': Adhesive material

## Claims

1. A secondary battery module comprising:
a plurality of secondary batteries in which an electrode assembly is accommodated in a battery case of which an edge is sealed; and
a housing having an accommodation space in which the plurality of secondary batteries are accommodated,
wherein the battery case comprises:
at least one folding part, which is folded so that an end thereof is surrounded inward, on the edge; and
at least one exhaust part, in which sealing is released to discharge an internal gas of the battery case when the end is exposed to the outside, and an internal pressure of the battery case is higher than a predetermined pressure, on the edge,
wherein at least one venting part through which the gas discharged from the exhaust part is exhausted to the outside is provided in the housing.

2. The secondary battery module of claim 1, wherein the venting part has a hole structure that passes through the inside and outside of the housing.

3. The secondary battery module of claim 1, wherein the venting part is provided in a side portion of the housing.

4. The secondary battery module of claim 1, wherein the housing comprises:
a support frame configured to support a stack of the secondary batteries; and
a pair of end plates coupled to the support frame and disposed on front and rear surfaces of the plurality of secondary batteries,
wherein the venting part is provided in the endplate.

5. The secondary battery module of claim 4, wherein each of the secondary batteries comprises an electrode lead protruding from the battery case,
the endplate is disposed to face the electrode lead, and
the venting part is provided at a position facing the battery case.

6. The secondary battery module of claim 4, wherein the venting part has a hole structure that is stepped inside the endplate.

7. The secondary battery module of claim 6, wherein the venting part is gradually expanded outward from the inside of the endplate.

8. The secondary battery module of claim 1, further comprising a cover part attached to the housing to correspond to a position of the venting part,
wherein the cover part is configured to seal the venting part when the internal pressure of the accommodation space is less than the predetermined pressure, and
the cover part is ruptured to open the venting part when the internal pressure of the accommodation space is equal to or greater than the predetermined pressure.

9. The secondary battery module of claim 8, wherein the cover part is made of a porous material.

10. The secondary battery module of claim 1, wherein the exhaust part is folded at least one time or more so that an end of the exhaust part is exposed to the outside.

11. The secondary battery module of claim 10, wherein the folding part is folded at least two times or more, and
the exhaust part is folded in a direction opposite to the folding part.

12. The secondary battery module of claim 10, wherein the exhaust part is folded less times than the folding part.

13. The secondary battery module of claim 10, wherein a gap between inner surfaces provided to face each other by the folding in the exhaust part is greater than that between inner surfaces provided to face each other by the folding in the folding part.

14. The secondary battery module of claim 1, further comprising an electrode lead protruding from at least one end of the battery case,
wherein the exhaust part is disposed on remaining ends except for the end from which the electrode lead protrudes.

15. The secondary battery module of claim 14, wherein the folding part is disposed on remaining ends except for the end from which the electrode lead protrudes.

16. The secondary battery module of claim 1, wherein the exhaust part is provided in plurality, which are spaced apart from each other in a longitudinal direction of the battery case, and
the exhaust part is disposed between the plurality of folding parts.

17. The secondary battery module of claim 1, further comprising a membrane part folded so that both ends thereof are connected to the exhaust part to surround an end of the exhaust part.

18. The secondary battery module of claim 17, wherein both ends of the membrane part are unfolded in a state of being connected to an outer surface of the exhaust part when the pressure inside the battery case is equal to or greater than the predetermined pressure to release the sealing of the exhaust part.

19. The secondary battery module of claim 17, wherein the membrane part is made of a porous material.

20. The secondary battery module of claim 1, wherein the secondary battery further comprises an adhesive member attached to the outside of the folding part so that the folding part is maintained in folded shape.

21. The secondary battery module of claim 1, wherein, in the secondary battery, sealing strength of the folding part is greater than that of the exhaust part.
